(19) Europäisches Patentamt
European Patent Office
Office européen des brevets

(11) Numéro de publication: **0 118 326**
**B1**

(12) **FASCICULE DE BREVET EUROPEEN**

(45) Date de publication du fascicule du brevet: **01.07.87**

(51) Int. Cl.[4]: **C 08 F 236/04,** C 08 F 2/20, C 08 F 265/04 // (C08F265/04, 236:04)

(21) Numéro de dépôt: **84400119.8**

(22) Date de dépôt: **20.01.84**

(54) **Latex stables et amphotères de copolymères à base de diènes conjugués.**

(30) Priorité: **28.01.83 FR 8301302**

(43) Date de publication de la demande:
**12.09.84 Bulletin 84/37**

(45) Mention de la délivrance du brevet:
**01.07.87 Bulletin 87/27**

(84) Etats contractants désignés:
**AT BE CH DE FR GB IT LI LU NL SE**

(56) Documents cités:
**US-A-3 399 159**
**US-A-3 404 114**

(73) Titulaire: **RHONE-POULENC SPECIALITES CHIMIQUES**
**"Les Miroirs" 18, Avenue d'Alsace**
**F-92400 Courbevoie (FR)**

(72) Inventeur: **Leising, Frédéric**
**38, rue de Coubron**
**F-93410 Vaujours (FR)**

(74) Mandataire: **Fabre, Madeleine-France et al**
**RHONE-POULENC INTERSERVICES Service Brevets Chimie 25, quai Paul Doumer**
**F-92408 Courbevoie Cédex (FR)**

**EP 0 118 326 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention a pour objet des latex stables amphotères à base de diènes conjugués obtenus par poymérisation en émulsion.

Il est connu d'après le brevet américain n°3.399.159 de préparer des latex cationiques en deux étapes, une lère étape consistant à polymériser en milieu très acide (pH de l'ordre de 1 à 3,5) un monomère azoté (du type vinylpyridine, terbutylaminoéthylméthacrylate) et un acrylate d'alkyle en l'absence d'émulsifiant et une 2ème étape consistant à polymériser un diène au sein de la dispersion aqueuse obtenue à la lère étape.

Il est également connu d'après le brevet américain n°3.404.114 de préparer des latex amphotères en deux étapes, la lère étape consistant à polymériser un acide carboxylique insaturé et un ester d'acide insaturé et la 2ème étape consistant, après neutralisation du milieu à un pH voisin de 7, à l'aide d'un agent de neutralisation azoté, à polymériser au sein dudit milieu un alkylaminoalkyl ester d'un acide carboxylique insaturé. Un tel procédé nécessite une opération de neutralisation intermédiaire.

Le but de la demanderesse a été de préparer des dispersions aqueuses stables et amphotères de copolymères à base de diènes conjugués, à un pH quelconque et sans étape de neutralisation intermédiaire.

Les latex amphotères de copolymères à base de diènes conjugués faisant l'objet de l'invention sont caractérisés en ce qu'ils sont obtenus en deux étapes:

— une première étape consistant à préparer une dispersion aqueuse amphotère de particules en mettant en présence au moins un composé azoté insaturé totalement ou partiellement hydrolysable en milieu acide ou alcalin, susceptible de générer des charges anioniques par hydrolyse totale ou partielle en milieu basique, avec le milieu réactionnel (A) d'une opération de polymérisation en émulsion aqueuse d'au moins un monomère non ionogène copolymérisable avec ledit composé azoté insaturé hydrolysable, ledit milieu réactionnel (A) contenant des charges essentiellement cationiques apportées par au moins une substance génératrice de charges cationiques liables chimiquement aux polymères obtenus à partir des monomères présents, la quantité de substance génératrice de charges cationiques mise en oeuvre correspondant à un rapport nombre de charges cationiques générées par ladite substance génératrice de charges cationiques/nombre de charges anioniques générées par le composé azoté insaturé en milieu basique inférieur à 1 et ce jusqu'à un taux de transformation d'au moins 30% des monomères non-ionogènes.

— une deuxième étape consistant à copolymériser, au sein de la dispersion aqueuse amphotère obtenue à la première étape, au moins un diène conjugué et éventuellement au moins un monomère non-ionogène, en présence d'un amorceur non chargé ou générateur de charges cationiques.

A la lère étape, ledit composé azoté insaturé hydrolysable en milieu acide ou alcalin peut être mis en présence du milieu réactionnel (A) à un stade quelconque de l'opération de polymérisation du ou des monomères non ionogènes copolymérisables avec le composé azoté insaturé hydrolysable. Ainsi il peut être totalement présent dans le milieu réactionnel (A) dès le départ de la lère étape de polymérisation, en particulier lorsque celle-ci n'est pas menée jusqu'à son terme; il peut être également introduit en continu ou en discontinu tout au long de la lère étape de polymérisation, en particulier si celle-ci est totale; de même il peut n'être introduit dans le milieu réactionnel (A) qu'après un certain taux de transformation du ou des monomères non-ionogènes (à partir de 30% par exemple) ou bien en fin de lère étape de polymérisation (par exemple entre 90 et 98% de taux de transformation).

On considère que lesdits composés azotés insaturés sont partiellement hydrolysables lorsque leur taux d'hydrolyse en milieu acide ou alcalin dans les conditions réactionnelles de polymérisation est de l'ordre de 10% minimum.

Selon l'invention les composés azotés insaturés totalement ou partiellement hydrolysables en milieu acide ou alcalin, répondent à la formule générale:

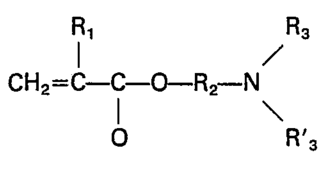

où:

$R_1$ représente un atome d'hydrogène ou un groupe méthyle,

$R_2$ représente un groupe méthylène ou éthylène,

$R_3$ représente un atome d'hydrogène ou un groupe alkyle linéaire contenant de 1 à 4 atomes de carbone,

$R'_3$ représente un atome d'hydrogène ou un groupe alkyle linéaire contenant de 1 à 4 atomes de carbone, ainsi qu'un groupe alkyle ramifié contenant 3 ou 4 atomes de carbone lorsque $R_3$ représente un atome d'hydrogène, le nombre total d'atomes de carbone présents dans les groupes $R_2$, $R_3$ et $R'_3$ étant inférieur ou égal à 8 et de préférence inférieur ou égal à 6.

Répondent à cette formule le diméthylaminométhylacrylate ou méthacrylate, le diméthylaminoéthylacrylate ou méthacrylate, le tertiobutylaminométhylacrylate ou méthacrylate, le tertiobutylaminoéthylacrylate ou méthacrylate.

Parmi les monomères non ionogènes copolymérisables avec les composés azotés insaturés hydrolysables, on peut citer:

les composés vinylaromatiques tels que le styrène, l'α-méthylstyrène, le vinyltoluène, le monochlorostyrène.

les esters vinyliques tels que l'acétate de vinyle, le propionate de vinyle, le versatate de vinyle, le butyrate de vinyle...

les nitriles éthyléniques tels que l'acrylonitrile, le méthacrylonitrile...

les esters carboxyliques éthyléniques tels que le méthyl-, éthyl-, propyl-, isopropyl-, butyl-, 2-éthylhexyl-, hydroxyéthyl-, hydroxypropyl- ou glycidyl-acrylate, le méthyl-, éthyl-, propyl-, butyl-, hydroxyéthyl-, hydroxypropyl- ou glycidyl-méthacrylate, etc...

les dialkylesters des diacides carboxyliques éthyléniques, tels que les dialkylesters de l'acide fumarique, maléique, itaconique...

les amides éthyléniques et leurs dérivés N-substitués tels que l'acrylamide, le méthacrylamide, le N-méthylol-, N-méthoxyméthyl-acrylamide ou -méthacrylamide...

Lesdits monomères non-ionogènes peuvent être utilisés seuls ou bien en mélange entre eux lorsqu'ils sont copolymérisables entre eux.

Les substances génératrices de charges cationiques pouvant être mises en oeuvre sont des produits non hydrolysables ou partiellement hydrolysables, c'est-à-dire des produits dont le taux d'hydrolyse dans les conditions réactionnelles de polymérisation est inférieur ou égal à 50% environ.

Parmi celles-ci on peut citer

1) Les amorceurs de polymerisation générateurs de radicaux présentant une extrémité cationique tels que: le chlorhydrate de 2,2'azobis(2-amidinopropane), le chlorhydrate d'azobis N,N'diméthylèneisobutyramidine.

2) Les sels insaturés copolymérisables d'onium polycoordiné d'un élément des groupes VB et VIB de la classification périodique tel que l'azote, le phosphore, le soufre.

On entend par "sels insaturés d'onium polycoordiné d'un élément des groupes VB et VIB" tout sel présentant un cation onium dans lequel toutes les valences de l'élément des groupes VB et VIB sont satisfaites par des groupements hydrocarbonés, élément dont la valence libre est saturée par un atome de carbone, au moins un desdits groupements hydrocarbonés étant insaturé.

A titre d'exemple on peut citer les sels insaturés d'ammonium quaternaire présentant la formule suivante:

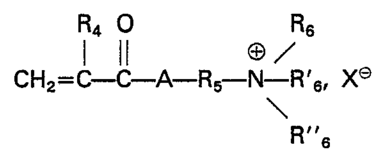

où

$X^-$ est choisi parmi les anions suivants: $Cl^-$, $Br^-$, $I^-$, $SO_4H^-$, $SO_4^{--}$, $CH_3SO_4^-$, $C_2H_5SO_4^-$, $CH_3COO^-$,

$R_4$ représente un atome d'hydrogène ou un groupe méthyle

A représente un atome d'oxygène ou un groupe —NH—

$R_5$ représente un groupe alkylène linéaire ou ramifié contenant de 1 à 18 atomes de carbone, de préférence de 1 à 10 atomes de carbone

$R_6$, $R'_6$, $R''_6$ sont semblables ou différents et représentent un groupe alkyle contenant de 1 à atomes de carbone éventuellement substitué par un radical hydroxy, un groupe phényle éventuellement substitué par un radical alkyle contenant de 1 à 9 atomes de carbone.

le nombre total d'atomes de carbone présent dans les groupes $R_5$, $R_6$, $R'_6$ et $R''_6$ est supérieur à 4 quand A représente de l'oxygène.

Des produits répondant à cette formule sont le chlorure de triméthylaminoéthylacrylamide, le bromure de triméthylaminopropylacrylamide ou méthacrylamide, le méthylsulfate de triméthylaminobutylacrylamide ou méthacrylamide, le chlorure de triméthylaminopropylméthacrylate.

Parmi les sels d'onium insaturés on peut également citer

— les sels insaturés de pyridinium, quinolinium, imidazolium, benzimidazolium.... tels que:

le bromure de 1-méthyl 2-vinylpyridinium,
le chlorure de 1-éthyl 2-vinylpyridinium
le méthylsulfate de 1-éthyl 2-vinylpyridinium
le chlorure de 1-benzyl 4-vinylpyridinium
l'iodure de 1-méthyl 2-vinylquinolinium
le bromure de N-vinyl N'-méthylimidazolium
le bromure de 1-vinyl 3-méthylbenzimidazolium

— le chlorure de (2-méthacryloxy)diméthylsulfonium
— le méthylsulfate de méthyldiallylsulfonium
— le bromure de triméthylvinylphosphonium

La mise en oeuvre de la substance génératrice de charge cationiques dans le milieu réactionnel (A) peut être préalable à celle du composé azoté insaturé hydrolysable ou concomittante de celle dudit composé azoté insaturé.

Ladite substance génératrice de charges cationiques peut également être présente dans le milieu réactionnel (A) au départ de l'opération de polymérisation par l'intermédiaire d'une "semence cationique" c'est-à-dire d'un polymère ou copolymère préalablement préparé par polymérisation en émulsion aqueuse en milieu cationique du ou des monomères non-ionogènes en présence de la quantité désirée de substance génératrice de charges cationiques.

Pour une bonne réalisation de la lère étape du procédé permettant de préparer les latex amphotères de diènes conjugués faisant l'objet de l'invention, on met en oeuvre une quantité de composé azoté insaturé hydrolysable correspondant à environ 1—20%, de préférence 1—10%, en poids par rapport au poids de monomère(s) non ionogène(s), mis en oeuvre à la lère étape, et ce exprimé en poids de matière sèche;

La quantité de substance génératrice de charges cationiques favorablement mise en oeuvre est fonction du taux d'hydrolyse du composé azoté insaturé hydrolysable et de la substance génératrice de charges cationiques dans les conditions réactionnelles de l'opération de polymérisation. Ainsi pour un taux d'hydrolyse de 90% environ du composé azoté insaturé hydrolysable et de 0% de la substance génératrice de charges cationiques, on mettra en oeuvre une quantité de substance génératrice de charges cationiques correspondant à un rapport molaire R=nombre de moles de substance génératrice de charges cationiques+nombre de moles de composé azoté insaturé hydrolysable/nombre de moles de monomères non ionogènes compris entre 1 et 15 et, de préférence, entre 1 et 10; pour un taux d'hydrolyse de 10% environ du composé azoté insaturé hydrolysable et de 0% de la substance génératrice de charges cationiques, ledit rapport molaire R est favorablement compris entre 0,1 et 1,5 et, de préférence, entre 0,2 et 1; pour un taux d'hydrolyse de 90% environ du composé azoté insaturé hydrolysable et 25% environ de la substance génératrice de charges cationiques, ledit rapport molaire est favorablement compris entre 0,5 et 10 et, de préférence, entre 1 et 5.

L'opération de copolymérisation du composé azoté insaturé et du ou des monomères ionogènes constituant la lère étape du procédé permettant de préparer les latex amphotères faisant l'objet de l'invention, est réalisée dans les conditions classiques de polymérisation en émulsion aqueuse en milieu cationique à une température comprise entre 60 et 90°C et généralement entre 75 et 85°C, à un pH quelconque (pouvant varier de 3 à 12 et de préférence de 5 à 9) en présence d'un amorceur cationique ou non-ionique, éventuellement d'un agent émulsifiant cationique ou non-ionique et en outre en présence de la substance génératrice de charges cationiques, ladite substance étant constituée d'un sel insaturé copolymérisable d'onium polycoordiné d'un élément du groupe VB ou VIB et/ou d'un excés d'amorceur cationique.

Les amorceurs cationiques pouvant être mis en oeuvre sont ceux déjà cités ci-dessus comme exemple de substance génératrice de charges cationiques.

Comme exemples d'amorceurs non-ioniques, on peut citer:

les peroxydes et hydroperoxydes minéraux ou organiques hydrosolubles ou organosolubles générateurs de radicaux libres non chargés tels que le peroxyde d'hydrogène, le peroxyde de benzoyle, l'hydroperoxyde et tert-butyle, l'hydroperoxyde de cumène, le tert-butylperbenzoate, le peroxyde de diisopropylbenzène, le peroxyde de méthyléthylcétone;

les systèmes redox obtenus en associant auxdits peroxydes ou hydroperoxydes un réducteur tel que l'acide ascorbique, les sucres, les sels métalliques polyvalents, les sulfites, hydrosulfites, sulfoxalates, thiosulfates, bisulfites de sodium, calcium.... le formaldéhyde sulfoxylate de sodium ou de zinc....

les composés azoaliphatiques présentant un groupe azoacyclique et un atome de carbone aliphatique sur chaque atome d'azote, au moins un des atomes de carbone étant tertiaire, tels que l'azobisisobutyronitrile, le 2,2' azobis(2,4-diméthylvaléronitrile), le 2,2' azobis(2,4,4 triméthylvaléronitrile), le 2,2' azobis(2,4 diméthyl-4 méthoxyvaléronitrile).

Comme exemples d'émulsifiants non-ioniques on peut citer les alcools gras polyéthoxylés, les alkylphénols polyéthoxylés, les acides gras polyéthoxylés...

A titre d'exemple d'agents émulsifiants cationiques non copolymérisables, en peut citer:

— le décylammonium méthylsulfate,
— le bromure de N-éthyldodécylammonium,
— le chlorure de cétylammonium,
— le bromure de cétylammonium,
— le bromure de stéarylammonium,
— le bromure de cétyldiméthylbenzylammonium,
— le chlorure de N,N-diméthyldodécylammonium,
— l'iodure de N-méthyltridécylammonium,
— les chlorures, bromures, sulfates, méthylsulfates ou acétates d'amines grasses éthoxylées.

La quantité d'amorceur mise en oeuvre pour réaliser l'opération de polymérisation est fonction du ou des monomères mis en oeuvre et de la température de polymérisation; celle-ci est généralement de l'ordre de 0,1 à 5% en poids par rapport au poids total de monomères, et de préférence de l'ordre de 0,1 à 2%.

Il est bien évident que si l'amorceur est le principal constituant ou un des constituants de la substance génératrice des charges cationiques, un excès par rapport à ces quantités doit être utilisé.

La quantité d'émulsifiant cationique ou non-ionique mise en oeuvre pour stabiliser les particules de copolymères peut aller jusqu'à 2% du poids total de monomères.

Parmi les diènes conjugués pouvant être mis en oeuvre pour réaliser la deuxième étape du procédé permettant de préparer les latex cationiques faisant l'objet de l'invention, on peut citer le butadiène, l'isoprène, le chloroprène, le 1,3-pentadiène, le diméthylbutadiène, le cyclopentadiène....

Ceux-ci peuvent être is en oeuvre selon des quantités correspondant à environ 20 à 80% en poids, de préférence de 25 à 65% en poids par rapport au poids total de monomères utilisé pour réaliser l'ensemble du procédé (c'est-à-dire diène inclus).

La quantité de monomère(s) non ionogène(s) éventuellement présente à côté du diène conjugué pour réaliser la 2ème étape peut atteindre 80% en poids environ de la quantité totale de monomères mise en oeuvre pour réaliser l'ensemble du procédé.

La deuxième étape de copolymérisation peut être réalisée dans des conditions de température et de pH semblables à celles de la 1ère étape, éventuellement en présence d'un agent limiteur de chaine et d'une quantité supplémentaire d'amorceur non chargé ou générateur de radicaux cationiques si nécessaire.

Comme exemples de limiteurs de chaîne on peut citer: les mercaptans tels que le n-butyl, n-octyl-, n-lauryl-, t-dodécyl- mercaptan; des dérivés halogénés tels que le tétrachlorure de carbone, le chloroforme, le trichlorobromométhane, le tétrabromure de carbone...

Les latex amphotères de copolymères à base de diènes conjugués faisant l'objet de l'invention présentent un potentiel zéta pouvant varier depuis +80 mV à −60 mV lorsque le pH varie de 2 à 12 par exemple.

Lesdits latex amphotères peuvent être utilisés comme liants pour le couchage du papier, pour la préparation de voiles de non-tissés, pour le revêtement de substrats métalliques...

Les exemples suivants sont donnés à titre indicatif et ne peuvent être considérés comme une limite du domaine et de l'esprit de l'invention.

Exemple 1

A) 1ère étape

On charge à froid dans un autoclave de 5 litres de capacité, muni d'un agitateur du type à ancre tournant à 180 t/mn

— 866 g d'eau désionisée
— 7,5 g de bromure de cétyldiméthylbenzylammonium
— 15 g de chlorure de triméthylaminopropylméthacrylamide,
— 15 g de diméthylaminoéthylacrylate.

On porte l'autoclave à une température de 75°C.

On introduit à l'arrivée en température:

— en une seule fois 7,5 g de 2,2' azobis(2-amidinopropane) chlorhydrate avec 50 g d'eau désionisée;
— en continu pendant 5 heures sous débit constant:
750 g d'acrylate de butyle
660 g de styrène
60 g de diméthylaminoéthylacrylate.

puis 10 mn après l'arrivée en température, on introduit en continu pendant 7 heures sous débit constant:

— 15 g de 2,2'-azobis(2 amidinopropane) chlorhydrate
— 420 g d'eau désionisée.

La réaction est arrêtée par refroidissement après 11 heures de marche totale.

Le taux de transformation est de 99%.

Le produit obtenu est une dispersion présentant les caractérisques suivantes:

| | |
|---|---|
| — pH | 7,5 |
| — quantité d'extrait sec | 44% |
| — viscosité Brookfield (50 t/mn) | 191 mPa . s |
| — diamètre moyen des particules | 0,1 μ |

Le caractère amphotère de la dispersion ainsi préparée est mis en évidence par mesure du potentiel zéta en fonction du pH. La mesure est effectuée à l'aide d'un appareil de microélectrophorèse MARK II

fabriqué par RANK BROTHERS et réalisée à une concentration de 0,05% en polymère sous une tension de mesure de 80 volts et à une température de 25°C.

Les résultats de cette mesure sont les suivants:

| pH | potentiel zéta en mV |
|---|---|
| 4,5 | +55 |
| 8,5 | −28 |

B) 2ème étape

On charge à froid dans un autoclave de 5 litres de capacité muni d'un agitateur du type à hélice tournant à 150 t/mn,

— 900 g d'eau désionisée
— 170 g de la dispersion préparée à la 1ère étape.

On porte l'autoclave à une température de 75°C.

On introduit à l'arrivée en température sous débit constant pendant 5 heures:

— 555 g de styrène
— 855 g de butadiène
— 9,75 g de tertiododécylmercaptan,

puis en continu sous débit pendant 7 heurs:

— 15 g de 2,2' azobis(2-amidinopropane) chlorhydrate et 375 g d'eau désionisée
— 15 g de nonylphénol oxyéthyléné à 30 chaînons d'oxyde d'éthylène.

La réaction est arrêtée par refroidissement après 12 h 30 mn de marche.

Le produit obtenu est une dispersion présentant les caractéristiques suivantes:

| | |
|---|---|
| pH | 7,6 |
| quantité d'extrait sec | 42,9% |
| viscosité Brookfield (50 t/mn) | 175 mPa.s |
| diamètre moyen des particules | 0,24 µ. |

Les résultats des mesures de potentiel zéta sont les suivants

| pH | potentiel zéta en mV |
|---|---|
| 4,5 | +41 |
| 9 | −35 |

Exemple 2

A) 1ère étape

On charge à froid dans un réacteur de 55 litres les ingrédients suivants:

— 1350 g d'eau désionisée
— 20 g de bromure de cétyldiméthylbenzylammonium
— 15 g de chlorure de triméthylaminopropylméthacrylamide
— 15 g de diméthylaminoéthylacrylate
— 159 g de styrène
— 129 g d'acrylate de butyle

On porte l'autoclave à une température de 75°Cet l'on introduit 15 g de chlorhydrate de 2,2' azobis(2-amidinopropane).

B) 2ème étape

Après 30 minutes environ, le taux de conversion est d'environ 90% et on introduit en continu pendant 5 heures sous débit constant:

— 901 g de styrène
— 731 g de butadiène
— 10 g de tertiododécylmercaptan.

On introduit ensuite en continu, pendant 5 heures, sous débit constant 10 g de chlorhydrate de 2,2'azobis(2-amidinopropane) dans 400 g d'eau désionisée.

On arrête la réaction par refroidissement après une durée totale de marche de 12 h 30 mn.

On obtient une dispersion amphotère présentant les caractéristiques suivantes:

| | |
|---|---|
| — pH | 8,9 |
| — quantité d'extrait sec | 43,4% |
| — viscosité Brookfield (50 t/mn) | 260 mPa.s |
| — diamètre moyen des particules | 0,22 μ |

Les résultats de mesure de potentiel zéta sont les suivants:

| pH | potentiel zéta en mV |
|---|---|
| 4,5 | +36 |
| 9,5 | −48 |

Exemple 3

On répète les opérations décrites à l'exemple 2 en limitant toutefois le taux de conversion en fin de 1ère étape à 50% au lieu de 90% (10 mn de réaction environ).

La dispersion obtenue présente les caractéristiques suivantes:

| | |
|---|---|
| — pH | 8,7 |
| — quantité d'extrait sec | 44,1% |
| — viscosité Brookfield (50 t/mn) | 198 mPa.s |
| — diamètre moyen des particules | 0,22 μ |

Les résultats de mesure de potentiel zéta sont les suivants:

| pH | potentiel zéta en mV |
|---|---|
| 4 | +49 |
| 8,2 | 0 |
| 9 | −31 |

Exemple 4

1ère étape

On répète l'opération décrite à la 1ère étape de l'exemple 1 en remplaçant les 15 g de chlorure de triméthylaminopropyl-méthacrylamide par 15 g de chlorure de 1-méthyl 2-vinylpyridinium.

On obtient une dispersion présentant les caractéristiques suivantes:

| | |
|---|---|
| — pH | 7,8 |
| — quantité d'extrait sec | 42,1% |
| — viscosité Brookfield (50 t/mn) | 181 mPa.s |
| — diamètre moyen des particules | 0,1 μ |

2ème étape

On répète l'opération décrite à la 2ème étape de l'exemple 1 en prenant comme semence 178 g du latex préparé à la 1ère étape ci-dessus.

On obtient une dispersion aqueuse présentant les caractéristiques suivantes:

| | |
|---|---|
| — pH | 8 |
| — quantité d'extrait sec | 45,1% |
| — viscosité Brookfield (50 t/mn) | 116 mPa.s |
| — diamètre moyen des particules | 0,25 μ |

Les résultats de mesure de potentiel zéta sont les suivants:

| pH | potentiel zéta en mV |
|---|---|
| 4 | +48 |
| 8,05 | 0 |
| 9 | −22 |

Exemple 5

1ère étape

On répète l'opération décrite à la 1ère étape de l'exemple 1 en remplaçant les 15 g+60 g de diméthylaminoéthylacrylate par les mêmes quantités de diméthylaminoéthylméthacrylate.

On obtient une dispersion présentant les caractéristiques suivantes:

- pH 8
- quantité d'extrait sec 45,1%
- viscosité Brookfield (50 t/mn) 156 mPa.s
- diamètre moyen des particules 0,1 μ

Les résultats de mesure du potentiel zéta sont les suivants:

| pH | potentiel zéta en mV |
|---|---|
| 4,5 | +52 |
| 9 | −29 |

2ème étape

On répète l'opération décrite à la 2ème étape de l'exemple 1 en prenant comme semence 166 g de la dispersion préparée à la 1ère étape ci-dessus.

On obtient une dispersion aqueuse présentant les caractéristiques suivantes:

- pH 8,2
- quantité d'extrait sec 45,6%
- viscosité Brookfield (50 t/mn) 185 mPa.s
- diamètre moyen des particules 0,25 μ

Les résultats de mesure de potentiel zéta sont les suivants:

| pH | potentiel zéta en mV |
|---|---|
| 4,5 | +48 |
| 8,25 | 0 |
| 8,9 | −25 |

Exemple 6

1ère étape

On répète l'opération décrite à la 1ère étape de l'exemple 1 en introduisant en continu pendant 5 heures 1410 g d'acrylate de butyle au lieu du mélange 750 g d'acrylate de butyle+660 g de styrène.

On obtient une dispersion présentant les caractéristiques suivantes:

- pH 7,8
- quantité d'extrait sec 46,2%
- viscosité Brookfield (50 t/mn) 241 mPa.s
- diamètre moyen des particules 0,1 μ

Les résultats de mesure du potentiel zéta sont les suivants:

| pH | potentiel zéta en mV |
|---|---|
| 4 | +58 |
| 8,5 | −26 |

2ème étape

On répète l'opération décrite à la 2ème étape de l'exemple 1 en prenant comme semence 162 g de la dispersion de polyacrylate de butyle préparée à la 1ère étape ci-dessus.

On obtient une dispersion aqueuse présentant les caractéristiques suivantes:

- pH 8
- quantité d'extrait sec 44,1%
- viscosité Brookfield (50 t/mn) 172 mPa.s
- diamètre moyen des particules 0,24 μ

Les résultats de mesure de potentiel zéta sont les suivants:

| pH | potentiel zéta en mV |
|---|---|
| 4,5 | +50 |
| 7,9 | 0 |
| 9 | −36 |

Exemple 7
1ère étape

On répète l'opération décrite à la 1ère étape de l'exemple 1 en introduisant en continu pendant 5 heures 1410 g de styrène au lieu du mélange 750 g d'acrylate de butyle+660 g de styrène.

On obtient une dispersion présentant les caractéristiques suivantes:

| | |
|---|---|
| — pH | 7,8 |
| — quantité d'extrait sec | 45,8% |
| — viscosité Brookfield (50 t/mn) | 116 mPa.s |
| — diamètre moyen des particules | 0,1 μ |

Les résultats de mesure du potentiel zéta sont les suivants:

| pH | potentiel zéta en mV |
|---|---|
| 4 | +52 |
| 8,5 | −20 |

2ème étape

On répète l'opération décrite à la 2ème étape de l'exemple 1 en prenant comme semence 164 g de la dispersion de polystyrène préparée à la 1ère étape ci-dessus.

On obtient une dispersion aqueuse présentant les caractéristiques suivantes:

| | |
|---|---|
| — pH | 8,1 |
| — quantité d'extrait sec | 43,2% |
| — viscosité Brookfield (50 t/mn) | 108 mPa.s |
| — diamètre moyen des particules | 0,24 μ |

Les résultats de mesure de potentiel zéta sont les suivants:

| pH | potentiel zéta en mV |
|---|---|
| 4,5 | +47 |
| 7,7 | 0 |
| 9 | −28 |

Exemple 8
1ère étape

On charge à froid dans un autoclave de 5 litres:

— 866 g d'eau désionisée
— 7,5 g de bromure de cétyldiméthylbenzylammonium
— 15 g de chlorure de triméthylaminopropylméthacrylamide

On porte l'autoclave à une température de 75°C; on introduit alors 7,5 g de chlorhydrate de 2-2'azobis(2L-amidinopropane) avec 50 g d'eau désionisée, puis pendant 5 heures sous débit constant:

— 750 g d'acrylate de butyle
— 660 g de styrène.

On laisse ensuite la réaction se dérouler pendant 4 heures à 75°C. Le taux de transformation est alors d'environ 90%; on introduit alors pendant 1 heure 75 g de diméthylaminoéthylacrylate.

Après une durée totale de 9 heures, la réaction est arrêtée par refroidissement.

Le produit obtenu présente les caractéristiques suivantes:

| | |
|---|---|
| — pH | 8 |
| — quantité d'extrait sec | 45,2% |
| — viscosité Brookfield (50 t/mn) | 216 mPa.s |
| — diamètre moyen des particules | 0,1 μ |

Les résultats de mesure de potentiel zéta sont les suivants:

| pH | potentiel zéta en mV |
|---|---|
| 4,5 | +62 mV |
| 9 | −33 mV |

2ème étape

On répète l'opération décrite à la 2ème étape de l'exemple 1 en prenant comme semence 166 g de la dispersion préparée à la 1ère étape ci-dessus.

La dispersion obtenue présente les caractéristiques suivantes:

| | |
|---|---|
| — pH | 8,2 |
| — quantité d'extrait sec | 43,7% |
| — viscosité Brookfield (50 t/mn) | 205 mPa.s |
| — diamètre moyen des particules | 0,26 µ |

Les résultats de mesure de potentiel zéta sont les suivants:

| pH | potentiel zéta en mV |
|---|---|
| 4,5 | +51 mV |
| 7,8 | 0 |
| 9 | −23 mV |

Exemple 9

1ère étape

On répète l'opération décrite à la 1ère étape de l'exemple 1.

2ème étape

On répète l'opération décrite à la 2ème étape de l'exemple 1 en remplaçant le butadiène par 885 g d'isoprène.

On obtient une dispersion aqueuse présentant les caractéristiques suivantes:

| | |
|---|---|
| — pH | 8,1 |
| — quantité d'extrait sec | 39% |
| — viscosité Brookfield (50 t/mn) | 88 mPa.s |
| — diamètre moyen des particules | 0,25 µ |

Les résultats de mesure de potentiel zéta sont les suivants:

| pH | potentiel zéta en mV |
|---|---|
| 4,5 | +39 |
| 8,4 | 0 |
| 9 | −19 |

Exemple 10

1ère étape

On répète l'opération décrite à la 1ère étape de l'exemple 2 en remplaçant le mélange de 159 g de styrène et 129 g d'acrylate de butyle par 288 g d'acrylate de butyle.

2ème étape

On répète l'opération décrite à la 2ème étape de l'exemple 2

On obtient une dispersion aqueuse présentant les caractéristiques suivantes:

| | |
|---|---|
| — pH | 8,5 |
| — quantité d'extrait sec | 43,2% |
| — viscosité Brookfield (50 t/mn) | 152 mPa.s |
| — diamètre moyen des particules | 0,25 µ |

Les résultats de mesure de potentiel zéta sont les suivants:

| pH | potentiel zéta en mV |
|---|---|
| 4,5 | +39 |
| 8,1 | 0 |
| 9 | −23 |

Exemple 11
1ère étape
On répète l'opération décrite à la 1ère étape de l'exemple 2 en remplaçant le mélange de 159 g de styrène et de 129 g d'acrylate de butyle par 288 g de styrène.

2ème étape
On répète l'opération décrite à la 2ème étape de l'exemple 2
On obtient une dispersion aqueuse présentant les caractéristiques suivantes:

| | |
|---|---|
| — pH | 7,6 |
| — quantité d'extrait sec | 43,1% |
| — viscosité Brookfield (50 t/mn) | 204 mPa.s |
| — diamètre moyen des particules | 0,24 µ |

Les résultats de mesure de potentiel zéta sont les suivants:

| pH | potentiel zéta en mV |
|---|---|
| 4,5 | +39 |
| 7,8 | 0 |
| 9 | −25 |

Exemple 12
1ère étape
On répète l'opération décrite à la 1ère étape de l'exemple 2 en limitant le taux de conversion à 30% au lieu de 90%.

2ème étape
On répète l'opération décrite à la 2ème étape de l'exemple 2.
On obtient une dispersion aqueuse présentant les caractéristiques suivantes:

| | |
|---|---|
| — pH | 8,0 |
| — quantité d'extrait sec | 44,8% |
| — viscosité Brookfield (50 t/mn) | 48 mPa.s |
| — diamètre moyen des particules | 0,23 µ |

Les résultats de mesure de potentiel zéta sont les suivants:

| pH | potentiel zéta en mV |
|---|---|
| 4,5 | +41 |
| 8 | 0 |
| 9 | −30 |

Exemple 13
1ère étape
On répète l'opération décrite à la 1ère étape de l'exemple 1.

2ème étape
On répète l'opération décrite à la 2ème étape de l'exemple 1 en introduisant sous débit constant pendant 5 heures:

— 720 g de styrène
— 555 g de butadiène
— 225 g d'acrylonitrile
— 6,3 g de tertiododécylmercaptan.

On obtient une dispersion aqueuse présentant les caractéristiques suivantes:

| | |
|---|---|
| — pH | 8,1 |
| — quantité d'extrait sec | 44,2% |
| — viscosité Brookfield (50 t/mn) | 152 mPa.s |
| — diamètre moyen des particules | 0,25 µ |

Les résults de mesure de potentiel zéta sont les suivants:

| pH | potentiel zéta en mV |
|---|---|
| 4,5 | +51 |
| 7,3 | 0 |
| 9 | −31 |

**Revendications pour les Etats Contractants: BE, CH, DE, FR, GB, IT, LI, LU, NL, SE**

1. Latex amphotères de copolymères à base de diènes conjugués caractérisés en ce qu'ils sont obtenus en deux étapes:

— une première étape consistant à préparer une dispersion aqueuse amphotère de particules en mettant en présence au moins un composé azoté insaturé totalement ou partiellement hydrolysable en milieu acide ou alcalin, susceptible de générer des charges anioniques par hydrolyse totale ou partielle en milieu basique et ayant pour formule:

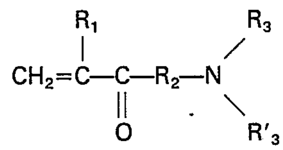

où:

$R_1$ représente un atome d'hydrogène ou un groupe méthyle,

$R_2$ représente un groupe méthylène ou éthylène,

$R_3$ représente un atome d'hydrogène ou un groupe alkyle linéaire contenant de 1 à 4 atomes de carbone,

$R'_3$ représente un atome d'hydrogène ou un groupe alkyle linéaire contenant de 1 à 4 atomes de carbone, ainsi qu'un groupe alkyle ramifié contenant 3 ou 4 atomes de carbone lorsque $R_3$ représente un atome d'hydrogène, le nombre total d'atomes de carbone présents dans les groupes $R_2$, $R_3$ et $R'_3$ étant inférieur ou égal à 8;

avec le milieu réactionnel (A) d'une opération de polymérisation en émulsion aqueuse d'au moins un monomère non ionogène copolymérisable avec ledit composé azoté insaturé hydrolysable, ledit milieu réactionnel (A) contenant des charges essentiellement cationiques apportées par au moins une substance génératrice de charges cationiques liables chimiquement auxdits polymères synthétiques, la quantité de substance génératrice de charges cationiques mise en oeuvre correspondant à un rapport nombre de charge cationiques générées par ladite substance génératrice de charges cationiques/nombre de charges anioniques générées par le composé azoté insaturé en milieu basique inférieur à 1 et ce jusqu'à un taux de transformation d'au moins 30% des monomères non-ionogènes.

— une deuxième étape consistant à copolymériser, au sein de la dispersion aqueuse amphotère obtenue à la première étape, au moins un diène conjugué et éventuellement au moins un monomère non-ionogène, en présence d'un amorceur non chargé ou générateur de charges cationiques.

2. Latex selon la revendication 1 caractérisés en ce que ledit composé azoté insaturé hydrolysable en milieu acide ou alcalin est mis en présence du milieu réactionnel (A) à un stade quelconque de l'opération de polymérisation du ou des monomères non ionogènes copolymérisables avec le composé azoté insaturé hydrolysable.

3. Latex selon la revendication 1 ou 2 caractérisés en ce que le composé azoté insaturé hydrolysable est du diméthylaminométhylacrylate ou méthacrylate, du diméthylaminoéthylacrylate ou méthacrylate, du tertiobutylaminométhylacrylate ou méthacrylate ou du tertiobutylaminoéthylacrylate ou méthacrylate.

4. Latex selon l'une quelconque des revendications précédentes caractérisés en ce que le ou les monomères non ionogènes copolymérisables avec le composé azoté insaturé sont des composés vinylaromatiques, des esters vinyliques, des nitriles éthyléniques, des esters carboxyliques éthyléniques, des dialkylesters de diacides carboxyliques éthyléniques, ou des amides éthyléniques et leurs dérivés N-substitués.

5. Latex selon l'une quelconque des revendications précédentes caractérisés en ce que la substance génératrice de charges cationiques est constituée par un amorceur de polymérisation générateur de radicaux présentant une extrémité cationique et/ou un sel insaturé copolymérisable d'onium polycoordiné d'un élément des groupes VB et VIB.

6. Latex selon la revendication 5, caractérisés en ce que la substance génératrice de charges cationiques est un sel insaturé d'ammonium quaternaire de formule:

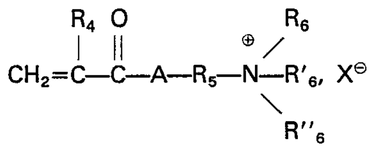

où

$X^-$ est choisi parmi les anions suivants: $Cl^-$, $Br^-$, $I^-$, $SO_4H^-$, $SO_4^{--}$, $CH_3SO_4^-$, $C_2H_5SO_4^-$, $CH_3COO^-$,
$R_4$ représente un atome d'hydrogène ou un groupe méthyle
A représente un atome d'oxygène ou un groupe —NH—
$R_5$ représente un groupe alkylène linéaire ou ramifié contenant de 1 à 18 atomes de carbone;
$R_6$, $R'_6$, $R''_6$ sont semblables ou différents et représentent un groupe alkyle contenant de 1 à 4 atomes de carbone éventuellement substitué par un radical hydroxy, un groupe phényle éventuellement substitué par un radical alkyle contenant de 1 à 9 atomes de carbone.
le nombre total d'atomes de carbone présent dans les groupes $R_5$, $R_6$, $R'_6$ et $R''_6$ est supérieur à 4 quand A représente de l'oxygène.

7. Latex selon la revendication 6, caractérisés en ce que le sel insaturé d'ammonium quaternaire est du chlorure de triméthylaminoéthylacrylamide ou méthacrylamide, du bromure de triméthylaminopropylacrylamide ou méthacrylamide, du méthylsulfate de triméthylaminobutylacrylamide ou méthacrylamide, ou du chlorure de triméthylaminopropylméthacrylate.

8. Latex selon la revendication 5) caractérisés en ce que la substance génératrice de charge cationique est un sel insaturé de pyridinium, de quinolinium, d'imidazolium ou de benzimidazolium.

9. Latex selon l'une quelconque des revendications précédentes caractérisés en ce que la mise en oeuvre de la substance génératrice de charges cationiques dans le milieu réactionnel (A) est préalable à celle du composé azoté insaturé hydrolysable ou concomittante de celle dudit composé azoté insaturé.

10. Latex selon l'une quelconque des revendications précédentes caractérisés en ce que ladite substance génératrice de charges cationiques est présente dans le milieu réactionnel (A) au départ de l'opération de polymérisation par l'intermédiaire d'une "semence cationique".

11. Latex selon l'une quelconque des revendications précédentes caractérisés en ce que la quantité de composé azoté insaturé hydrolysable correspond à 1—20% en poids par rapport au poids de monomère(s) non ionogène(s).

12. Latex selon la revendication 11, caractérisés en ce que la quantité de composé azoté insaturé correspond à 1—10% en poids par rapport au poids de monomère(s) non ionogène(s).

13. Latex selon l'une quelconque des revendications précédentes caractérisés en ce que pour un taux d'hydrolyse de 90% du composé azoté insaturé hydrolysable et de 0% de la substance génératrice de charges cationiques, on met en oeuvre une quantité de substance génératrice de charges cationiques correspondant à un rapport molaire R=nombre de moles de substance génératrice de charges cationiques+nombre de moles de composé azoté insaturé hydrolysable/nombre de moles de monomères non ionogènes, compris entre 1 et 15.

14. Latex selon l'une quelconque des revendications précédentes caractérisés en ce que la première étape de polymérisation est réalisée à une température comprise entre 60 et 90°C à un pH quelconque en présence d'un amorceur cationique ou non-ionique et éventuellement d'un agent émulsifiant cationique ou non-ionique.

15. Latex selon l'une quelconque des revendications précédentes, caractérisés en ce que le diène conjugué mis en oeuvre à la 2ème étape de polymérisation est du butadiène, de l'isoprène, du chloroprène, du 1—3 pentadiène, du diméthylbutadiène, du cyclopentadiène.

16. Latex selon l'une quelconque des revendications précédentes, caractérisés en ce que la quantité de diène conjugué mise en oeuvre correspond à 20 à 80% en poids par rapport au poids total de monomères utilisé pour réaliser l'ensemble du procédé.

17. Latex selon la revendication 16, caractérisés en ce que la quantité de diène conjugué correspond à 25 à 65% en poids par rapport au poids total de monomères utilisé pour réaliser l'ensemble du procédé.

18. Latex selon l'une quelconque des revendications précédentes, caractérisés en ce que la quantité de monomère(s) non ionogène(s) éventuellement présente à côté du diène conjugué pour réaliser la 2ème étape peut atteindre 80% en poids de la quantité totale de monomères mise en oeuvre pour réaliser l'ensemble du procédé.

19. Latex selon l'une quelconque des revendications précédentes, caractérisés en ce que la 2ème étape de polymérisation est réalisée à une température comprise entre 60 et 90°C à un pH quelconque éventuellement en présence d'un agent limiteur de chaîne.

20. Application des latex amphotères à base de diènes conjugués faisant l'objet de l'une quelconque des revendications précédentes, comme liants.

**Revendications pour l'Etat Contractant: AT**

1. Procédé de préparation de latex amphotères de copolymères à base de diènes conjugués caractérisé en ce qu'il comprend les deux étapes suivantes:

— une première étape consistant à préparer une dispersion aqueuse amphotère de particules en mettant en présence au moins un composé azoté insaturé totalement ou partiellement hydrolysable en milieu acide ou alcalin, susceptible de générer des charges anioniques par hydrolyse totale ou partielle en milieu basique et ayant pour formule:

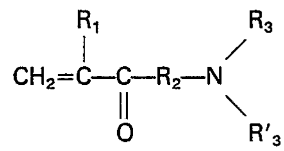

où:

$R_1$ représente un atome d'hydrogène ou un groupe méthyle,

$R_2$ représente un groupe méthylène ou éthylène,

$R_3$ représente un atome d'hydrogène ou un groupe alkyle linéaire contenant de 1 à 4 atomes de carbone,

$R'_3$ représente un atome d'hydrogène ou un groupe alkyle linéaire contenant de 1 à 4 atomes de carbone, ainsi qu'un groupe alkyle ramifié contenant 3 ou 4 atomes de carbone lorsque $R_3$ représente un atome d'hydrogène, le nombre total d'atomes de carbone présents dans les groupes $R_2$, $R_3$ et $R'_3$ étant inférieur ou égal à 8;

avec le milieu réactionnel (A) d'une opération de polymérisation en émulsion aqueuse d'au moins un monomère non ionogène copolymérisable avec ledit composé azoté insaturé hydrolysable, ledit milieu réactionnel (A) contenant des charges essentiellement cationiques apportées par au moins une substance génératrice de charges cationiques liables chimiquement auxdits polymères synthétiques, la quantité de substance génératrice de charges cationiques mise en oeuvre correspondant à un rapport nombre de charge cationiques générées par ladite substance génératrice de charges cationiques/nombre de charges anioniques générées par le composé azoté insaturé en milieu basique inférieur à 1 et ce jusqu'à un taux de transformation d'au moins 30% des monomères non-ionogènes.

— une deuxième étape consistant à copolymériser, au sein de la dispersion aqueuse amphotère obtenue à la première étape, au moins un diène conjugué et éventuellement au moins un monomère non-ionogène, en présence d'un amorceur non chargé ou générateur de charges cationiques.

2. Procédé selon la revendication 1 caractérisé en ce que ledit composé azoté insaturé hydrolysable en milieu acide ou alcalin est mis en présence du milieu réactionnel (A) à un stade quelconque de l'opération de polymérisation du ou des monomères non ionogènes copolymérisables avec le composé azoté insaturé hydrolysable.

3. Procédé selon la revendication 1 ou 2 caractérisé en ce que le composé azoté insaturé hydrolysable est du diméthylaminométhylacrylate ou méthacrylate, du diméthylaminoéthylacrylate ou méthacrylate, du tertiobutylaminométhylacrylate ou méthacrylate ou du tertiobutylaminoéthylacrylate ou méthacrylate.

4. Procédé selon l'une quelconque des revendications précédentes caractérisé en ce que le ou les monomères non ionogènes copolymérisables avec le composé azoté insaturé sont des composés vinylaromatiques, des esters vinyliques, des nitriles éthyléniques, des esters carboxyliques éthyléniques, des dialkylesters de diacides carboxyliques éthyléniques, ou des amides éthyléniques et leurs dérivés N-substitués.

5. Procédé selon l'une quelconque des revendications précédentes caractérisé en ce que la substance génératrice de charges cationiques est constituée par un amorceur de polymérisation générateur de radicaux présentant une extrémité cationique et/ou un sel insaturé copolymérisable d'onium polycoordiné d'un élément des groupes VB et VIB.

6. Procédé selon la revendication 5, caractérisé en ce que la substance génératrice de charges cationiques est un sel insaturé d'ammonium quaternaire de formule:

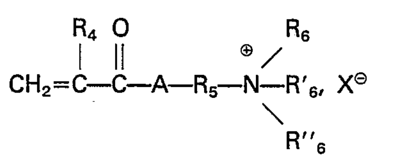

où

$X^-$ est choisi parmi les anions suivants: $Cl^-$, $Br^-$, $I^-$, $SO_4H^-$, $SO_4^{--}$, $CH_3SO_4^-$, $C_2H_5SO_4^-$, $CH_3COO^-$,

$R_4$ représente un atome d'hydrogène ou un groupe méthyle

A représente un atome d'oxygène ou un groupe —NH—

$R_5$ représente un groupe alkylène linéaire ou ramifié contenant de 1 à 18 atomes de carbone;

$R_6$, $R'_6$, $R''_6$ sont semblables ou différents et représentent un groupe alkyle contenant de 1 à 4 atomes

de carbone éventuellement substitué par un radical hydroxy, un groupe phényle éventuellement substitué par un radical alkyle contenant de 1 à 9 atomes de carbone.

le nombre total d'atomes de carbone présent dans les groupes $R_5$, $R_6$, $R'_6$ et $R''_6$ est supérieur à 4 quand A représente de l'oxygène.

7. Procédé selon la revendication 6, caractérisé en ce que le sel insaturé d'ammonium quaternaire est du chlorure de triméthylaminoéthylacrylamide ou méthacrylamide, du bromure de triméthylaminopropylacrylamide ou méthacrylamide, du méthylsulfate de triméthylaminobutylacrylamide ou méthacrylamide, ou du chlorure de triméthylaminopropylméthacrylate.

8. Procédé selon la revendication 5) caractérisé en ce que la substance génératrice de charge cationique est un sel insaturé de pyridinium, de quinolinium, d'imidazolium ou de benzimidazolium.

9. Procédé selon l'une quelconque des revendications précédentes caractérisé en ce que la mise en oeuvre de la substance génératrice de charges cationiques dans le milieu réactionnel (A) est préalable à celle du composé azoté insaturé hydrolysable ou concomittante de celle dudit composé azoté insaturé.

10. Procédé selon l'une quelconque des revendications précédentes caractérisé en ce que ladite substance génératrice de charges cationiques est présente dans le milieu réactionnel (A) au départ de l'opération de polymérisation par l'intermédiaire d'une "semence cationique".

11. Procédé selon l'une quelconque des revendications précédentes caractérisé en ce que la quantité de composé azoté insaturé hydrolysable correspond à 1—20% en poids par rapport au poids de monomère(s) non ionogène(s).

12. Procédé selon la revendication 11, caractérisé en ce que la quantité de composé azoté insaturé correspond à 1—10% en poids par rapport au poids de monomère(s) non ionogène(s).

13. Procédé selon l'une quelconque des revendications précédentes caractérisé en ce que pour un taux d'hydrolyse de 90% du composé azoté insaturé hydrolysable et de 0% de la substance génératrice de charges cationiques, on met en oeuvre une quantité de substance génératrice de charges cationiques correspondant à un rapport molaire R=nombre de moles de substance génératrice de charges cationiques+nombre de moles de composé azoté insaturé hydrolysable/nombre de moles de monomères non ionogènes, compris entre 1 et 15.

14. Procédé selon l'une quelconque des revendications précédentes caractérisé en ce que la première étape de polymérisation est réalisée à une température comprise entre 60 et 90°C à un pH quelconque en présence d'un amorceur cationique ou non-ionique et éventuellement d'un agent émulsifiant cationique ou non-ionique.

15. Procédé selon l'une quelconque des revendications précédentes, caractérisé en ce que le diène conjugué mis en oeuvre à la 2ème étape de polymérisation est du butadiène, de l'isoprène, du chloroprène, du 1—3 pentadiène, du diméthylbutadiène, du cyclopentadiène.

16. Procédé selon l'une quelconque des revendications précédentes, caractérisé en ce que la quantité de diène conjugué mise en oeuvre correspond à 20 à 80% en poids par rapport au poids total de monomères utilisé pour réaliser l'ensemble du procédé.

17. Procédé selon la revendication 16, caractérisé en ce que la quantité de diène conjugué correspond à 25 à 65% en poids par rapport au poids total de monomères utilisé pour réaliser l'ensemble du procédé.

18. Procédé selon l'une quelconque des revendications précédentes, caractérisé en ce que la quantité de monomère(s) non ionogène(s) éventuellement présente à côté du diène conjugué pour réaliser la 2ème étape peut atteindre 80% en poids de la quantité totale de monomères mise en oeuvre pour réaliser l'ensemble du procédé.

19. Procédé selon l'une quelconque des revendications précédentes, caractérisé en ce que la 2ème étape de polymérisation est réalisée à une température comprise entre 60 et 90°C à un pH quelconque éventuellement en présence d'un agent limiteur de chaîne.

20. Application des latex amphotères à base de diènes conjugués obtenus selon le procédé faisant l'objet de l'une quelconque des revendications précédentes, comme liants.

**Patentansprüche für die Vertragsstaaten: BE, CH, DE, FR, GB, IT, LI, LU, NL, SE**

1. Amphotere Latices von Copolymeren auf Grundlage von konjugierten Dienen, dadurch gekennzeichnet, daß sie in zwei Schritten erhalten werden:

— einem ersten Schritt bestehend in der Herstellung einer amphoteren wässrigen Dispersion von Partikeln durch Zugabe mindestens einer in alkalischem oder saurem Milieu völlig oder teilweise hydrolisierbaren ungesättigten stickstoffhaltigen Verbindung, die geeignet ist, durch völlige oder teilweise Hydrolyse in basischem Milieu anionische Ladungen zu erzeugen, und die die folgende Formel hat:

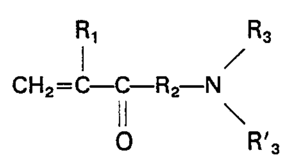

wobei:

— $R_1$ ein Wasserstoffatom oder eine Methylgruppe darstellt,
— $R_2$ eine Methylen oder Ethylengruppe darstellt,
— $R_3$ ein Wasserstoffatom oder eine lineare Alkylgruppe mit 1 bis 4 Kohlenstoffatomen darstellt,
— $R'_3$ ein Wasserstoffatom oder eine lineare Alkylgruppe mit 1 bis 4 Kohlenstoffatomen darstellt, sowie eine verzweigte Alkylgruppe mit 3 oder 4 Kohlenstoffatomen, wenn $R_3$ ein Wasserstoffatom darstellt, wobei die Gesamtzahl der Kohlenstoffatome der Gruppen $R_2$, $R_3$ und $R'_3$ geringer oder gleich 8 ist;

zu dem Reaktionsmilieu (A) eines Polymerisationsvorgangs in wässriger Emulsion mindestens eines nicht ionogenen Monomeren, das mit genannter stickstoffhaltiger ungesättigter hydrolysierbarer Verbindung copolymerisierbar ist, wobei des Reaktionsmilieu (A) im wesentlichen kationische Ladungsträger enthält, die von mindestens einer Erzeugersubstanz für kationische Ladungsträger geliefert werden, wobei die kationischen Ladungsträger chemisch verknüpfbar sind mit genannten synthetischen Polymeren, wobei die kationische Ladungsträger erzeugende Substanz in einer Menge eingesetzt wird, die einem Verhältnis: Anzahl der durch genannte Erzeugersubstanz für kationische Ladungsträger erzeugten kationischen Ladungsträger/Anzahl der durch die ungesättigte stickstoffhaltige Verbindung im basischen Milieu erzeugten anionischen Ladungsträger geringer als 1 entspricht und zwar bis zu einem Umwandlungsgrad von mindestens 30% der nicht ionogenen Monomeren.

— einem zweiten Schritt bestehend in der Copolymerisation mindestens eines konjugierten Diens und gegebenenfalls mindestens eines nicht ionogenen Monomeren in der amphoteren wässrigen Dispersion, die im ersten Schritt erhalten wurde, in Gegenwart eines nicht geladenen Starters oder eines Erzeugers für kationische Ladungsträger.

2. Latices nach Anspruch 1, dadurch gekennzeichnet, daß die genannte im sauren oder alkalischen Milieu hydrolysierbare stickstoffhaltige ungesättigte Verbindung dem Reaktionsmilieu (A) in irgendeinem Stadium des Polymerisationsvorgangs des oder der nicht ionogenen, mit der stickstoffhaltigen ungesättigten hydrolysierbaren Verbindung copolymerisierbaren, Monomeren, zugegeben wird.

3. Latices nach Anspruch 1 oder 2, dadurch gekennzeichnet, daß die stickstoffhaltige ungesättigte hydrolysierbare Verbindung Dimethylaminomethylacrylat oder -methacrylat, Dimethylaminoethylacrylat oder -methacrylat, Tertiärbutylaminomethylacrylat oder -methacrylat oder Tertiärbutylaminoethylacrylat oder -methacrylat ist.

4. Latices nach einem der vorhergehenden Ansprüche, dadurch gekennzeichnet, daß die nicht ionogenen, mit der ungesättigten stickstoffhaltigen Verbindung copoymerisierbaren, Monomeren vinylaromatische Verbindungen sind, vinylische Ester, ethylenische Nitrile, Ester ethylenischer Carbonsäuren, Dialkylester ethylenischer Dicarbonsäuren oder ethylenische Amine und deren N-substituierte Derivate.

5. Latices nach einem der vorhergehenden Ansprüche, dadurch gekennzeichnet, daß die kationische Ladungsträger erzeugende Substanz aus einem Radikale erzeugenden Polymerisationsstarter besteht, mit einem kationischen Ende und/oder aus einem ungesättigten copolymerisierbaren Oniumsalz, polyccordiniert mit einem Element der Gruppen VB und VIB.

6. Latices nach Anspruch 5, dadurch gekennzeichnet, daß die kationische Ladungsträger erzeugende Substanz ein ungesättigtes quaternäres Ammoniumsalz der Formel:

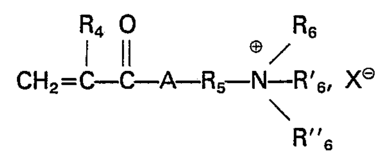

ist, wobei:
— $X^-$ ausgewählt wird aus den folgenden Anionen: $Cl^-$, $Br^-$, $J^-$, $SO_4H^-$, $SO_4^{--}$, $CH_3SO_4^-$, $C_2H_5SO_4^-$, $CH_3COO^-$,
— $R_4$ ein Wasserstoffatom oder eine Methylgruppe darstellt,
— A ein Sauerstoffatom oder eine NH-Gruppe darstellt,
— $R_5$ eine lineare oder verzweigte Alkylengruppe darstellt mit 1 bis 18 Kohlenstoffatomen;
— $R_6$, $R'_6$, $R''_6$ gleich oder unterschiedlich sind und eine Alkylgruppe darstellen mit 1 bis 4 Kohlenstoffatomen, evtl. substituiert durch eine Hydroxygruppe oder eine Phenylgruppe evtl. substituiert durch einen Alkylrest mit 1 bis 9 Kohlenstoffatomen.
— wobei die Gesamtzahl der in den Gruppen $R_5$, $R_6$, $R'_6$ und $R''_6$ vorhandenen Kohlenstoffatome größer als 4 ist, wenn A ein Sauerstoffatom darstelllt.

7. Latices nach Anspruch 6, dadurch gekennzeichnet, daß das ungesättigte quaternäre Ammoniumsalz das Chlorid des Trimethylaminoethylacrylamids oder -methacrylamids, das Bromid des Trimethylaminopropylacrylamids oder -methacrylamids, das Methylsulfat des Trimethylaminobutylacrylamids oder -methacrylamids oder das Chlorid des Trimethylaminopropylmethacrylat ist.

8. Latices nach Anspruch 5, dadurch gekennzeichnet, daß die kationische Ladungsträger erzeugende Substanz ein ungesättigtes Pyridinium-, Chinolinium-, Imidazolium- oder Benzimidazoliumsalz ist.

9. Latices nach einem der vorhergehenden Ansprüche, dadurch gekennzeichnet, daß die Zugabe der kationische Ladungsträger erzeugenden Substanz zum Reaktionsmilieu (A) vor der Zugabe der hydrolysierbaren ungesättigten stickstoffhaltigen Verbindung oder gleichzeitig mit der Zugabe dieser ungesättigten stickstoffhaltigen Verbindung erfolgt.

10. Latices nach einem der vorhergehenden Ansprüche, dadurch gekennzeichnet, daß die genannte kationische Ladungsträger erzeugende Substanz im Reaktionsmilieu (A) zu Beginn des Polymerisationsvorgangs mittels einer "kationischen Saat" anwesend ist.

11. Latices nach einem der vorhergehenden Ansprüche, dadurch gekennzeichnet, daß die Menge der hydrolysierbaren ungesättigten stickstoffhaltigen Verbindung 1 bis 20 Gew.% bezogen auf das Gewicht des (der) nicht ionogenen Monomeren entspricht.

12. Latices nach Anspruch 11, dadurch gekennzeichnet, daß die Menge der ungesättigten stickstoffhaltigen Verbindung 1 bis 10 Gew.% bezogen auf das Gewicht des (der) nicht ionogenen Monomeren entspricht.

13. Latices nach einem der vorhergehenden Ansprüche, dadurch gekennzeichnet, daß man für einen Hydrolysegrad von 90% an hydrolysierbarer ungesättigter stickstoffhaltiger Verbindung und von 0% an kationische Ladungsträger erzeugender Substanz eine Menge an kationische Ladungsträger erzeugenden Substanz zugibt, die einem molaren Verhältnis R=Anzahl der Mole an kationische Ladungsträger erzeugende Substanz+Anzahl der Mole an stickstoffhaltiger ungesättigter hydrolysierbarer Verbindung/Anzahl der Mole der nicht ionogenen Monomeren zwischen 1 und 15 entspricht.

14. Latices nach einem der vorhergehenden Ansprüche, dadurch gekennzeichnet, daß der erste Schritt der Polymerisation bei einer Temperatur zwischen 60 und 90°C, bei irgendeinem pH und in Gegenwart eines kationischen oder nicht ionischen Starters und gegebenenfalls eines kationischen oder nicht ionischen emulsierenden Agens ausgeführt wird.

15. Latices nach einem der vorhergehenden Ansprüche, dadurch gekennzeichnet, daß das im zweiten Schritt der Polymerisation eingesetzte konjugierte Dien Butadien, Isopren, Chloropren, 1—3 Pentadien, Dimethylbutadien, Cyclopentadien ist.

16. Latices nach einem der vorhergehenden Ansprüche, dadurch gekennzeichnet, daß die Menge an eingesetztem konjugiertem Dien 20 bis 80 Gew.% bezogen auf das Gesamtgewicht der zur Ausführung des Gesamtverfahrens verwendeten Monomeren entspricht.

17. Latices nach Anspruch 16, dadurch gekennzeichnet, daß die Menge an konjugiertem Dien 25 bis 65 Gew.% bezogen auf das Gesamtgewicht der zur Durchführung des Gesamtverfahrens eingesetzten Monomeren entspricht.

18. Latices nach einem der vorhergehenden Ansprüche, dadurch gekennzeichnet, daß die Menge des (der) evtl. zur Ausführung des zweiten Schritts neben dem konjugierten Dien anwesenden Monomeren 80 Gew.% erreichen kann, bezogen auf die Gesamtmenge der zur Ausführung des gesamten Verfahrens eingesetzten Monomeren.

19. Latices nach einem der vorhergehenden Ansprüche, dadurch gekennzeichnet, daß der zweite Schritt der Polymerisation bei einer Temperatur zwischen 60 und 90°C, bei irgendeinem pH, gegebenenfalls in Gegenwart eines kettenbegrenzenden Agens durchgeführt wird.

20. Verwendung der amphoteren Latices auf Grundlage konjugierter Diene, die Gegenstand eines der vorhergehenden Ansprüche sind, als Bindemittel.

**Patentansprüche für den Vertragsstaat: AT**

1. Verfahren zur Herstellung amphoterer Latices von Copolymeren auf Grundlage von konjugierten Dienen, dadurch gekennzeichnet, daß es die folgenden zwei Schritte umfaßt:

— einen ersten Schritt bestehend in der Herstellung einer amphoteren wässrigen Dispersion von Partikeln durch Zugabe mindestens einer in alkalischem oder saurem Milieu völlig oder teilweise hydrolisierbaren ungesättigten stickstoffhaltigen Verbindung, die geeignet ist, durch völlige oder teilweise Hydrolyse in basischem Milieu anionische Ladungen zu erzeugen, und die die folgende Formel hat:

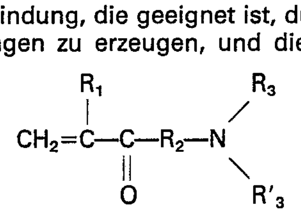

wobei:

— $R_1$ ein Wasserstoffatom oder eine Methylgruppe darstellt,
— $R_2$ eine Methylen oder Ethylengruppe darstellt,
— $R_3$ ein Wasserstoffatom oder eine lineare Alkylgruppe mit 1 bis 4 Kohlenstoffatomen darstellt,
— $R'_3$ ein Wasserstoffatom oder eine lineare Alkylgruppe mit 1 bis 4 Kohlenstoffatomen darstellt, sowie eine verzweigte Alkylgruppe mit 3 oder 4 Kohlenstoffatomen, wenn $R_3$ ein Wasserstoffatom darstellt, wobei die Gesamtzahl der Kohlenstoffatome der Gruppen $R_2$, $R_3$ und $R'_3$ geringer oder gleich 8 ist;

zu dem Reaktionsmilieu (A) eines Polymerisationsvorgangs in wässriger Emulsion mindestens eines nicht ionogenen Monomeren, das mit genannter stickstoffhaltiger ungesättigter hydrolysierbarer Verbindung copolymerisierbar ist, wobei das Reaktionsmilieu (A) im wesentlichen kationische Ladungsträger enthält, die von mindestens einer Erzeugersubstanz für kationische Ladungsträger geliefert werden, wobei die kationischen Ladungsträger chemisch verknüpfbar sind mit genannten synthetischen Polymeren, wobei die kationische Ladungsträger erzeugende Substanz in einer Menge eingesetzt wird, die einem Verhältnis: Anzahl der durch genannte Erzeugersubstanz für kationische Ladungsträger erzeugten kationischen Ladungsträger/Anzahl der durch die ungesättigte stickstoffhaltige Verbinding im basischen Milieu erzeugetn anionischen Ladungsträger geringer als 1 entspricht und zwar bis zu einem Umwandlungsgrad von mindestens 30% der nicht ionogenen Monomeren.

— einen zweiten Schritt bestehend in der Copolymerisation mindestens eines konjugierten Diens und gegebenenfalls mindestens eines nicht ionogenen Monomeren in der amphoteren wässrigen Dispersion, die im ersten Schritt erhalten wurde, in Gegenwart eines nicht geladenen Starters oder eines Erzeugers für kationische Ladungsträger.

2. Verfahren nach Anspruch 1, dadurch gekennzeichnet, daß die genannte im sauren oder alkalischen Milieu hydrolysierbare stickstoffhaltige ungesättigte Verbinding dem Reaktionsmilieu (A) in irgendeinem Stadium des Polymerisationsvorgangs des oder der nicht ionogenen, mit der stickstoffhaltigen ungesättigten hydrolysierbaren Verbindung copoymerisierbaren, Monomeren, zugegeben wird.

3. Verfahren nach Anspruch 1 oder 2, dadurch gekennzeichnet, daß die stickstoffhaltige ungesättigte hydrolysierbare Verbindung Dimethylaminomethylacrylat oder -methacrylat, Dimethylaminoethylacrylat oder -methacrylat, Tertiärbutylaminomethylacrylat oder -methacrylat oder Tertiärbutylaminoethylacrylat oder -methacrylat ist.

4. Verfahren nach einem der vorhergehenden Ansprüche, dadurch gekennzeichnet, daß die nicht ionogenen, mit der ungesättigten stickstoffhaltigen Verbindung copoymerisierbaren, Monomeren vinylaromatische Verbindungen sind, vinylische Ester, ethylenische Nitrile, Ester ethylenischer Carbonsäuren, Dialkylester ethylenischer Dicarbonsäuren oder ethylenische Amine und deren N-substituierte Derivate.

5. Verfahren nach einem der vorhergehenden Ansprüche, dadurch gekennzeichnet, daß die kationische Ladungsträger erzeugende Substanz aus einem Radikale erzeugenden Polymerisationsstarter besteht, mit einem kationischen Ende und/oder aus einem ungesättigten copolymerisierbaren Oniumsalz, polyccordiniert mit einem Element der Gruppen VB und VIB.

6. Verfahren nach Anspruch 5, dadurch gekennzeichnet, daß die kationische Ladungsträger erzeugende Substanz ein ungesättigtes quaternäres Ammoniumsalz der Formel:

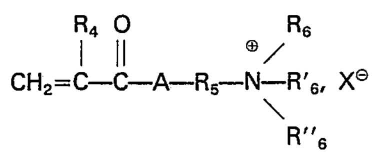

ist, wobei:

— $X^-$ ausgewählt wird aus den folgenden Anionen: $Cl^-$, $Br^-$, $J^-$, $SO_4H^-$, $SO_4^{--}$, $CH_3SO_4^-$, $C_2H_5SO_4^-$, $CH_3COO^-$,

— $R_4$ ein Wasserstoffatom oder eine Methylgruppe darstellt,

— A ein Sauerstoffatom oder eine NH-Gruppe darstellt,

— $R_5$ eine lineare oder verzweigte Alkylengruppe darstellt mit 1 bis 18 Kohlenstoffatomen;

— $R_6$, $R'_6$, $R''_6$ gleich oder unterschiedlich sind und eine Alkylgruppe darstellen mit 1 bis 4 Kohlenstoffatomen, evtl. substituiert durch eine Hydroxygruppe oder eine Phenylgruppe evtl. substituiert durch einen Alkylrest mit 1 bis 9 Kohlenstoffatomen.

— wobei die Gesamtzahl der in den Gruppen $R_5$, $R_6$, $R'_6$ und $R''_6$ vorhandenen Kohlenstoffatome größer als 4 ist, wenn A ein Sauerstoffatom darstellt.

7. Verfahren nach Anspruch 6, dadurch gekennzeichnet, daß das ungesättigte quaternäre Ammoniumsalz das Chlorid des Trimethylaminoethylacrylamids oder -methacrylamids, das Bromid des Trimethylaminopropylacrylamids oder -methacrylamids, das Methylsulfat des Trimethylaminobutylacrylamids oder -methacrylamids oder das Chlorid des Trimethylaminopropylmethacrylats ist.

8. Verfahren nach Anspruch 5, dadurch gekennzeichnet, daß die kationische Ladungsträger erzeugende Substanz ein ungesättigtes Pyridinium-, Chinolinium-, Imidazolium- oder Benzimidazoliumsalz ist.

9. Verfahren nach einem der vorhergehenden Ansprüche, dadurch gekennzeichnet, daß die Zugabe der kationische Ladungsträger erzeugenden Substanz zum Reaktionsmilieu (A) vor der Zugabe der hydrolysierbaren ungesättigten stickstoffhaltigen Verbindung oder gleichzeitig mit der Zugabe dieser ungesättigten stickstoffhaltigen Verbindung erfolgt.

10. Verfahren nach einem der vorhergehenden Ansprüche, dadurch gekennzeichnet, daß die genannte

kationische Ladungsträger erzeugende Substanz im Reaktionsmilieu (A) zu Beginn des Polymerisationsvorgangs mittels einer "kationischen Saat" anwesend ist.

11. Verfahren nach einem der vorhergehenden Ansprüche, dadurch gekennzeichnet, daß die Menge der hydrolysierbaren ungesättigten stickstoffhaltigen Verbindung 1 bis 20 Gew.% bezogen auf das Gewicht des (der) nicht ionogenen Monomeren entspricht.

12. Verfahren nach Anspruch 11, dadurch gekennzeichnet, daß die Menge der ungesättigten stickstoffhaltigen Verbinding 1 bis 10 Gew.% bezogen auf das Gewicht des (der) nicht ionogenen Monomeren entspricht.

13. Verfahren nach einem der vorhergehenden Ansprüche, dadurch gekennzeichnet, daß man für einen Hydrolysegrad von 90% an hydrolysierbarer ungesättigter stickstoffhaltiger Verbindung und von 0% an kationische Ladungsträger erzeugender Substanz eine Menge an kationische Ladungsträger erzeugenden Substanz zugibt, die einem molaren Verhältnis R=Anzahl der Mole an kationische Ladungsträger erzeugende Substanz+Anzahl der Mole an stickstoffhaltiger ungesättigter hydrolysierbarer Verbindung/Anzahl der Mole der nicht ionogenen Monomeren zwischen 1 und 15 entspricht.

14. Verfahren nach einem der vorhergehenden Ansprüche, dadurch gekennzeichnet, daß der erste Schritt der Polymerisation bei einer Temperatur zwischen 60 und 90°C, bei irgendeinem pH und in Gegenwart eines kationischen oder nicht ionischen Starters und gegebenenfalls eines kationischen oder nicht ionischen emulsierenden Agens ausgeführt wird.

15. Verfahren nach einem der vorhergehenden Ansprüche, dadurch gekennzeichnet, daß das im zweiten Schritt der Polymerisation eingesetzte konjugierte Dien Butadien, Isopren, Chloropren, 1—3 Pentadien, Dimethylbutadien, Cyclopentadien ist.

16. Verfahren nach einem der vorhergehenden Ansprüche, dadurch gekennzeichnet, daß die Menge an eingesetztem konjugiertem Dien 20 bis 80 Gew.% bezogen auf das Gesamtgewicht der zur Ausführung des Gesamtverfahrens verwendeten Monomeren entspricht.

17. Verfahren nach Anspruch 16, dadurch gekennzeichnet, daß die Menge an konjugiertem Dien 25 bis 65 Gew.% bezogen auf das Gesamtgewicht der zur Durchführung des Gesamtverfahrens eingesetzten Monomeren entspricht.

18. Verfahren nach einem der vorhergehenden Ansprüche, dadurch gekennzeichnet, daß die Menge des (der) evtl. zur Ausführung des zweiten Schritts neben dem konjugierten Dien anwesenden Monomeren 80 Gew.% erreichen kann, bezogen auf die Gesamtmenge der zur Ausführung des gesamten Verfahrens eingesetzten Monomeren.

19. Verfahren nach einem der vorhergehenden Ansprüche, dadurch gekennzeichnet, daß der zweite Schritt der Polymerisation bei einer Temperatur zwischen 60 und 90°C, bei irgendeinem pH, gegebenenfalls in Gegenwart eines kettenbegrenzenden Agens durchgeführt wird.

20. Verwendung der amphoteren Latices auf Grundlage konjugierter Diene, die nach dem Verfahren erhalten werden, das Gegenstand eines der vorhergehenden Ansprüche ist, als Bindemittel.

**Claims for the Contracting States: BE, CH, DE, FR, GB, IT, LI, LU, NL, SE**

1. Amphoteric latexes of copolymers based on conjugated dienes characterised in that they are produced in two steps:

— a first step comprising preparing an amphoteric aqueous dispersion of particles by bringing together at least one unsaturated nitrogen compound which is totally or partially hydrolysable in an acid or alkaline medium, capable of generating anionic charges by total or partial hydrolysis in a basic medium and being of the following formula:

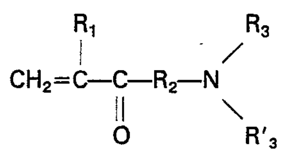

wherein:

$R_1$ represents a hydrogen atom or a methyl group,

$R_2$ represents a methylene or ethylene group,

$R_3$ represents a hydrogen atom or a straight alkyl group containing from 1 to 4 carbon atoms,

$R'_3$ represents a hydrogen atom or a straight alkyl group containing from 1 to 4 carbon atoms, and a branched alkyl group containing 3 or 4 carbon atoms when $R_3$ represents a hydrogen atom, the total number of carbon atoms present in the groups $R_2$, $R_3$ and $R'_3$ being lower than or equal to 8;

and the reaction medium (A) of an operation for polymerisation in aqueous emulsion of at least one non-ionogenic monomer copolymerisable with said hydrolysable unsaturated nitrogen compound, said reaction medium (A) containing essentially cationic charges provided by at least one substance for generating cationic charges which can be chemically bonded to said synthetic polymers, the amount of

cationic charge-generating substance used corresponding to a ratio between the number of cationic charges generated by said cationic charge-generating substance and the number of anionic charges generated by the unsaturated nitrogen compound in a basic medium, which is lower than 1, up to a rate of transformation of at least 30% of the non-ionogenic monomers, and

— a second step comprising copolymerising within the amphoteric aqueous dispersion produced in the first step, at least one conjugated diene and possibly at least one non-ionogenic monomer, in the presence of a non-charged initiator or cationic charge generator.

2. Latexes according to claim 1 characterised in that said unsaturated nitrogen compound which is hydrolysable in an acid or alkaline medium is brought together with the reaction medium (A) at any stage in the operation for polymerisation of the non-ionogenic monomer or monomers copolymerisable with the hydrolysable unsaturated nitrogen compound.

3. Latexes according to claim 1 or claim 2 characterised in that the hydrolysable unsaturated nitrogen compound is dimethylaminomethylacrylate or methacrylate, dimethylaminoethylacrylate or methacrylate, tertiobutylaminomethylacrylate or methacrylate or tertiobutylaminoethylacrylate or methacrylate.

4. Latexes according to any one of the preceding claims characterised in that the non-ionogenic monomer or monomers copolymerisable with the unsaturated nitrogen compound are vinyl aromatic compounds, vinyl esters, ethylenic nitriles, ethylenic carboxylic esters, dialkylesters of ethylenic carboxylic diacids or ethylenic amides and their N-substituted derivatives.

5. Latexes according to any one of the preceding claims characterised in that the cationic charge-generating substance is formed by a radical-generating polymerisation initiator having a cationic terminal residue and/or a copolymerisable unsaturated salt of polycoordinated onium of an element of groups VB and VIB.

6. Latexes according to claim 5 characterised in that the cationic charge-generating substance is an unsaturated quaternary ammonium salt of the following formula:

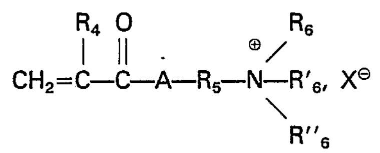

wherein:

$X^-$ is selected from the following anions: $Cl^-$, $Br^-$, $I^-$, $SO_4H^-$, $SO_4^{--}$, $CH_3SO_4^-$, $C_2H_5SO_4^-$, $CH_3COO^-$,

$R_4$ represents a hydrogen atom or a methyl group,

A represents an oxygen atom or an —NH— group,

$R_5$ represents a straight or branched alkylene group containing from 1 to 18 carbon atoms;

$R_6$, $R'_6$, $R''_6$ are similar or different and represent an alkyl group containing from 1 to 4 carbon atoms, possibly substituted by a hydroxy radical, and a phenyl group possibly substituted by an alkyl radical containing from 1 to 9 carbon atoms,

the total number of carbon atoms present in the groups $R_5$, $R_6$, $R'_6$ and $R''_6$ being greater than 4 when A represents oxygen.

7. Latexes according to claim 6 characterised in that the unsaturated quaternary ammonium salt is trimethylaminoethylacrylamide or methacrylamide chloride, trimethylaminopropylacrylamide or methacrylamide bromide, trimethylaminobutylacrylamide or methacrylamide methylsulphate, or trimethylaminopropylmethacrylate chloride.

8. Latexes according to claim 5 characterised in that the cationic charge-generating substance is an unsaturated salt of pyridinium, quinolinium, imidazolium or benzimidazolium.

9. Latexes according to any one of the preceding claims characterised in that use of the cationic charge-generating substance in the reaction medium (A) is prior to that of the hydrolysable unsaturated nitrogen compound or concurrent with that of said unsaturated nitrogen compound.

10. Latexes according to any one of the preceding claims characterised in that said cationic charge-generating substance is present in the reaction medium (A) at the beginning of the polymerisation operation by way of a "cationic seed".

11. Latexes according to any one of the preceding claims characterised in that the amount of hydrolysable unsaturated nitrogen compound corresponds to 1 to 20% by weight with respect to the weight of non-ionogenic monomer or monomers.

12. Latexes according to claim 11 characterised in that the amount of unsaturated nitrogen compound corresponds to 1 to 10% by weight with respect to the non-ionogenic monomer or monomers.

13. Latexes according to any one of the preceding claims characterised in that, for a degree of hydrolysis of 90% of the hydrolysable unsaturated nitrogen compound and 0% of the cationic charge-generating substance, there is used an amount of cationic charge-generating substance corresponding to a molar ratio R=number of moles of cationic charge-generating substance+number of moles of hydrolysable unsaturated nitrogen compound/number of moles of non-ionogenic monomers, of between 1 and 15.

14. Latexes according to any one of the preceding claims characterised in that the first polymerisation step is carried out at a temperature of between 60 and 90°C at any pH-value in the presence of a cationic or non-ionic initiator and possibly a cationic or non-ionic emulsifying agent.

15. Latexes according to any one of the preceding claims characterised in that the conjugated diene used in the second polymerisation step is butadiene, isoprene, chloroprene, penta-1,3-diene, dimethylbutadiene or cyclopentadiene.

16. Latexes according to any one of the preceding claims characterised in that the amount of conjugated diene used corresponds to 20 to 80% by weight with respect to the total weight of monomers used for carrying out the whole of the process.

17. Latexes according to claim 16 characterised in that the amount of conjugated diene corresponds to 25 to 65% by weight with respect to the total weight of monomers used for carrying out the whole of the process.

18. Latexes according to any one of the preceding claims characterised in that the amount of non-ionogenic monomer or monomers possibly present beside the conjugated diene for carrying out the second step may attain 80% by weight of the total amount of monomers used for carrying out the whole of the process.

19. Latexes according to any one of the preceding claims characterised in that the second polymerisation step is carried out at a temperature of between 60 and 90°C at any pH-value, possibly in the presence of a chain limiting agent.

20. Use of the amphoteric latexes based on conjugated dienes according to any one of the preceding claims, as binding agents.

**Claims for the Contracting State: AT**

1. A process for the preparation of amphoteric latexes of copolymers based on conjugated dienes characterised in that it comprises the following two steps:

— a first step comprising preparing an amphoteric aqueous dispersion of particles by bringing together at least one unsaturated nitrogen compound which is totally or partially hydrolysable in an acid or alkaline medium, capable of generating anionic charges by total or partial hydrolysis in a basic medium and being of the following formula:

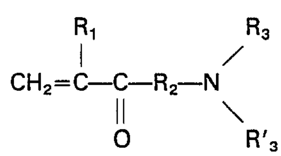

wherein:

$R_1$ represents a hydrogen atom or a methyl group,

$R_2$ represents a methylene or ethylene group,

$R_3$ represents a hydrogen atom or a straight alkyl group containing from 1 to 4 carbon atoms,

$R'_3$ represents a hydrogen atom or a straight alkyl group containing from 1 to 4 carbon atoms, and a branched alkyl group containing 3 or 4 carbon atoms when $R_3$ represents a hydrogen atom, the total number of carbon atoms present in the groups $R_2$, $R_3$ and $R'_3$ being lower than or equal to 8;

and the reaction medium (A) of an operation for polymerisation in aqueous emulsion of at least one non-ionogenic monomer copolymerisable with said hydrolysable unsaturated nitrogen compound, said reaction medium (A) containing essentially cationic charges provided by at least one substance for generating cationic charges which can be chemically bonded to said synthetic polymers, the amount of cationic charge-generating substance used corresponding to a ratio between the number of cationic charges generated by said cationic charge-generating substance and the number of anionic charges generated by the unsaturated nitrogen compound in a basic medium, which is lower than 1, up to a rate of transformation of at least 30% of the non-ionogenic monomers, and

— a second step comprising copolymerising within the amphoteric aqueous dispersion produced in the first step, at least one conjugated diene and possibly at least one non-ionogenic monomer, in the presence of a non-charged initiator or cationic charge generator.

2. Process according to claim 1 characterised in that said unsaturated nitrogen compound which is hydrolysable in an acid or alkaline medium is brought together with the reaction medium (A) at any stage in the operation for polymerisation of the non-ionogenic monomer or monomers copolymerisable with the hydrolysable unsaturated nitrogen compound.

3. Process according to claim 1 or claim 2 characterised in that the hydrolysable unsaturated nitrogen compound is dimethylaminomethylacrylate or methacrylate, dimethylaminoethylacrylate or methacrylate, tertiobutylaminomethylacrylate or methacrylate or tertiobutylaminoethylacrylate or methacrylate.

4. Process according to any one of the preceding claims characterised in that the non-ionogenic monomer or monomers copolymerisable with the unsaturated nitrogen compound are vinyl aromatic compounds, vinyl esters, ethylenic nitriles, ethylenic carboxylic esters, dialkylesters of ethylenic carboxylic diacids or ethylenic amides and their N-substituted derivatives.

5. Process according to any one of the preceding claims characterised in that the cationic charge-generating substance is formed by a radical-generating polymerisation initiator having a cationic terminal residue and/or a copolymerisable unsaturated salt of polycoordinated onium of an element of groups VB and VIB.

6. Process according to claim 5 characterised in that the cationic charge-generating substance is an unsaturated quaternary ammonium salt of the following formula:

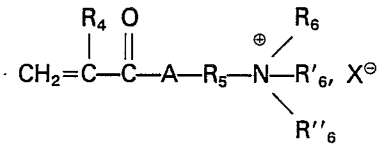

wherein:

$X^-$ is selected from the following anions: $Cl^-$, $Br^-$, $I^-$, $SO_4H^-$, $SO_4^{--}$, $CH_3SO_4^-$, $C_2H_5SO_4^-$, $CH_3COO^-$,

$R_4$ represents a hydrogen atom or a methyl group,

A represents an oxygen atom or an —NH— group,

$R_5$ represents a straight or branched alkylene group containing from 1 to 18 carbon atoms;

$R_6$, $R'_6$, $R''_6$ are similar or different and represent an alkyl group containing from 1 to 4 carbon atoms, possibly substituted by a hydroxy radical, and a phenyl group possibly substituted by an alkyl radical containing from 1 to 9 carbon atoms,

the total number of carbon atoms present in the groups $R_5$, $R_6$, $R'_6$ and $R''_6$ being greater than 4 when A represents oxygen.

7. Process according to claim 6 characterised in that the unsaturated quaternary ammonium salt is trimethylaminoethylacrylamide or methacrylamide chloride, trimethylaminopropylacrylamide or methacrylamide bromide, trimethylaminobutylacrylamide or methacrylamide methylsulphate, or trimethylaminopropylmethacrylate chloride.

8. Process according to claim 5 characterised in that the cationic charge-generating substance is an unsaturated salt of pyridinium, quinolinium, imidazolium or benzimidazolium.

9. Process according to any one of the preceding claims characterised in that use of the cationic charge-generating substance in the reaction medium (A) is prior to that of the hydrolysable unsaturated nitrogen compound or concurrent with that of said unsaturated nitrogen compound.

10. Process according to any one of the preceding claims characterised in that said cationic charge-generating substance is present in the reaction medium (A) at the beginning of the polymerisation operation by way of a "cationic seed".

11. Process according to any one of the preceding claims characterised in that the amount of hydrolysable unsaturated nitrogen compound corresponds to 1 to 20% by weight with respect to the weight of non-ionogenic monomer or monomers.

12. Process according to claim 11 characterised in that the amount of unsaturated nitrogen compound corresponds to 1 to 10% by weight with respect to the non-ionogenic monomer or monomers.

13. Process according to any one of the preceding claims characterised in that, for a degree of hydrolysis of 90% of the hydrolysable unsaturated nitrogen compound and 0% of the cationic charge-generating substance, there is used an amount of cationic charge-generating substance corresponding to a molar ratio R=number of moles of cationic charge-generating substance+number of moles of hydrolysable unsaturated nitrogen compound/number of moles of non-ionogenic monomers, of between 1 and 15.

14. Process according to any one of the preceding claims characterised in that the first polymerisation step is carried out at a temperature of between 60 and 90°C at any pH-value in the presence of a cationic or non-ionic initiator and possibly a cationic or non-ionic emulsifying agent.

15. Process according to any one of the preceding claims characterised in that the conjugated diene used in the second polymerisation step is butadiene, isoprene, chloroprene, penta-1,3-diene, dimethylbutadiene or cyclopentadiene.

16. Process according to any one of the preceding claims characterised in that the amount of conjugated diene used corresponds to 20 to 80% by weight with respect to the total weight of monomers used for carrying out the whole of the process.

17. Process according to claim 16 characterised in that the amount of conjugated diene corresponds to 25 to 65% by weight with respect to the total weight of monomers used for carrying out the whole of the process.

18. Process according to any one of the preceding claims characterised in that the amount of non-ionogenic monomer or monomers possibly present beside the conjugated diene for carrying out the second step may attain 80% by weight of the total amount of monomers used for carrying out the whole of the process.

19. Process according to any one of the preceding claims characterised in that the second polymerisation step is carried out at a temperature of between 60 and 90°C at any pH-value, possibly in the presence of a chain limiting agent.

20. Use of the amphoteric latexes based on conjugated dienes produced by the process according to any one of the preceding claims, as binding agents.